# EUROPEAN PATENT APPLICATION

(11) **EP 3 385 231 A1**
(43) Date of publication of application: **10.10.2018**
(21) Application number: 16879181.2
(22) Date of filing: 16.11.2016
(51) Int. Cl.: C02F 1/78, B01F 3/04, B01F 5/00, C01B 13/10, C02F 1/72, C02F 1/76, C02F 1/36, B01F 5/06, B01F 5/04

(54) **OZONE WATER TREATMENT SYSTEM USING LOW ENERGY**

(30) Priority: 24.12.2015 KR 20150186751
(71) Applicant: Paor Co., Ltd., Seongnam-si, Gyeonggi-do 13547 (KR)
(72) Inventor: SONG, Won Ki, Yongin-si Gyeonggi-do 16824 (KR)
(74) Representative: von Hirschhausen, Helge
(86) International application number: PCT/KR2016/013180
(87) International publication number: WO 2017/111314

(57) **Abstract**

The present invention relates to an ozone water treatment system using low energy. The present invention comprises: a water pipe through which raw water, to be treated, is transferred and supplied while having energy; a gas injector for dispersing and injecting, in a micro bubble form, ozone gas to the raw water supplied and transferred from the water pipe; a low-energy using-type gas-liquid contact reactor for promoting a contact reaction between the ozone gas and the raw water within ozone mixed water supplied and transferred from the gas injector; and a discharge pipe for continuously transferring and discharging treated water having been reaction-treated. Therefore, since energy use during the ozone gas injection and the contact reaction can be remarkably reduced, processing costs can be reduced.

## Description

### Technical field

The present invention relates to an ozone water treatment system using low energy, and more particularly, to an ozone water treatment system which can reduce processing costs by consuming low energy and in which excellent processing efficiency also is realized by using a low energy.

### Background art

Generally, the water treatment method using ozone (O3) is to perform advanced water purification treatment, water and sewage treatment, effluent/wastewater treatment and leaching water treatment, etc. by utilizing strong oxidizing power of ozone, decomposition power, sterilizing power, decolorizing power and deodorizing power.

In the field of water treatment using ozone gas, contaminated water is purified through reactions such as injection, contact and dissolution of ozone gas. Specifically, there are methods such as a diffuser method, an injector method, a pressurizing pump method, a turbine mixer method and a U tube method.

Among them, the diffuser method is a way that ozone gas is diffused in the water of the contaminated water in the form of micro bubble by using a diffuser to perform a water treatment by generating micro bubbles at a deep water depth.

However, the diffuser method has disadvantages such as clogging of holes for micro bubbles, difficulty in controlling bubble sizes, occurrence of a choke phenomenon and occurrence of channeling phenomenon as well as has problems such as contact and dissolution reactions are not good since the air-liquid contact occurs only through the vertical elevation due to the buoyancy of the micro bubble, the ozone utilization rate is very low due to the lowering of the ozone absorption rate and self-decomposition expansion, and the exhaust ozone concentration is also high, thereby causing environmental pollution. Thus, in recent years, it rarely is used except for the water supply treatment.

In addition, in recent years, there is a tendency that the injector method is frequently used. But, the injector method has problems that when the ozone gas is sucked in the injector, excessive energy loss occurs and the ozone gas cannot be sucked by more than a predetermined amount, and also a static mixer is used for the contact reaction in a subsequent process after suction in the injector and but the static mixer cause a large energy loss, and as a result, much more energy in the water treatment is consumed, resulting in low energy efficiency and low processing efficiency.

### Detailed description of the present invention

### Technical solution

The present invention is designed to solve the above-mentioned problems, and it is an object of the present invention to provide an ozone water treatment system using low energy which can reduce processing costs and improve practicability by reducing the use of energy when injecting an ozone gas into a raw water to be treated and when reacting the raw water and the ozone gas together after injection.

It also is an object of the present invention to provide an ozone water treatment system using low energy which can maximize the contact reaction between the raw water and the ozone gas in order to enhance the efficiency of ozone utilization and achieve complete water treatment.

The above objects and various advantages of the present invention will become more apparent from the preferred embodiment of the present invention by those skilled in the art.

### Technical solution

In order to achieve the above-mentioned object, the ozone water treatment system using low energy of the present invention is characterized in that it comprises: a water supply pipe through which a raw water to be treated is transferred and supplied while having energy; a gas injector for dispersing and injecting a ozone gas in the form of micro bubble to the raw water supplied from the water supply pipe; a low energy use-type gas-liquid contact reactor for promoting a contact reaction between the raw water and the ozone gas within ozone mixed water supplied and transferred from the gas injector; and an irrigation-type retention tank for promoting reaction by continuously transferring treated water having been react-treated and a discharge pipe for discharging, wherein the irrigation-type retention tank comprises an upper, lower, left and right, or an upper and lower baffle wall capable of forming a vortex for promoting the reaction.

It is preferable that the low energy use-type gas-liquid contact reactor may comprise one or more combinations selected from a plate type mixing reactor, a multiple-injection reactor and a split shear reactor.

It is also preferable that the raw water which is supplied through the water supply pipe is pressurized and transferred by potential energy due to a head drop.

It is also preferable to further comprise a water supply pump for supplying energy to the raw water and for sending the raw water.

It is also preferable to further comprise a raw water tank for storing and supplying the raw water to the water supply pipe.

It is also preferable to further comprise: an ozone generator for generating and supplying the ozone gas to be supplied to the gas injector; and an ozone supply pipe for transferring and supplying the ozone gas supplied from the ozone generator to the gas injector.

It is also preferable to further comprise a gas supply pipe for generating and supplying oxygen gas and chlorine gas in addition to ozone gas to be supplied to the gas injector.

It is also preferable that the type of the gas injector comprises a membrane type gas injector, a micro bubble type gas injector, or a gas injector which can directly and uniformly inject at whole area of the pipeline within the main pipeline of punched type injector and is made of materials such as STS304, STS316, STS316L, Astel Louis, PP, PE.

It is also preferable that the ozone gas injected in the form of micro bubble is complexly used by a plate type mixing reactor and a multiple-injection reactor to promote contact reaction and, then an ultrasonic cavitation phenomenon is occurred through an ultrasonic wave generator to further promote the contact reaction, and as a result, water treatment effects can be simultaneously achieved according to secondary contact reaction of ozone and raw water as well as ultrasonic waves.

It is also preferable to further comprise: a discharge water thank for storing the treated water discharged from the discharge pipe; and an injection means which is equipped at the end of the discharge pipe to inject the treated water in the water within the discharge water tank.

It is also preferable to further comprise a main reactor for promoting the contact reaction between the ozone gas and the raw water within the ozone mixed water supplied from the low energy use-type gas-liquid contact reactor and supplying the treated water having been reaction-treated to the discharge pipe.

It is also preferable that the low energy use-type gas-liquid contact reactor is equipped in the order of the plate type mixing reactor, the multiple-injection reactor, the split shear reactor and the multiple-injection reactor.

It is also preferable that an ultrasonic generator is selectively installed at the rear end of the main reactor and at the front end of the discharge pipe to minimize odor damage due to ozone by maximizing the reaction of the ozone that is not reacted in the pretreatment process and zeroing the residual ozone.

It is also preferable that the irrigation-type retention tank may be formed as a sealed irrigation-type capable of continuously maintaining the reaction with the fluid without the external outflow of gas.

It is also preferable that the main reactor comprises: an injection reverse mixing reactor for injecting, flowing backward and mixing the ozone mixed water to cause the contact reaction; and a reaction tank in which the injection reverse mixing reactor is embedded and the treated water discharged from the injection reverse mixing reactor is held and discharged.

It is also preferable to further comprise a low energy use-type gas-liquid contact reactor which is embedded in the reaction tank and performs the contact reaction with the ozone mixed water and then discharges to the injection reverse mixing reactor.

It is also preferable that the injection reverse mixing reactor may be composed of: an injection pipe in which the front end of which the ozone mixed water is flowed in is opened and the rear end of which the ozone mixed water is flowed out is reduced in cross section so that an injection hole is formed in the central portion; and a rear pipe which comprises: a concave reflection plate formed at the rear end to collide and flow backward the ozone mixed water injected from the injection pipe; and an outlet at one side to discharge the treated water.

It is also preferable that the gas injector can be comprised of: a main pipe for internally transferring the raw water supplied from the water supply pipe; and a porous pipe which is equipped with the main pipe and injects the ozone gas supplied through a plurality of injection holes in the water of the raw water in the form of micro bubble.

It is also preferable that the plate type mixing reactor may be composed of: an inflow reduction tube which is equipped in a shape such that the diameter is gradually reduced so as to change the flow path and the flow rate of the ozone mixed water supplied from the gas injector; a rear pipe which internally transfers the ozone mixed water supplied from the inflow reduction tube; and a protruding member which is equipped with a large number to be protruded on the inner surface of the rear pipe so that the direction and the flow rate of the ozone mixed water is changed, split and sheared and then the ozone mixed water is contacted.

It is also preferable that the multiple-injection reactor may be composed of: a main pipe for internally transferring the ozone mixed water; and a blocking porous plate which is equipped in a direction perpendicular to the flow direction of the ozone mixed water within the main pipe and has a plurality of through-holes through which the ozone mixed water passes.

It is also preferable that the split shear reactor may be composed of: a main pipe for internally transferring the ozone mixed water; and a spiral blade which is repeatedly equipped along a longitudinal direction within the main pipe and is in the form of a curved plate.

It is also preferable to further comprise: a circulation pipe which is branched in the middle of the discharge pipe and transfers a portion of the treated water toward the raw water tank for reprocessing; and a mixing feeder which mixes the treated water supplied through the circulation pipe and the raw water supplied from the raw water tank, and supplies mixed water to the water supply pipe.

It is also preferable that the mixing feeder may be composed of: a mixing pipe for mixing the treated water and the raw water while internally transferring the treated water and the raw water; and a strainer which is equipped within the mixing pipe and filters out foreign matter.

### Effect of the present invention

According to the present invention, as the use of energy at the time of injection the ozone gas and the contact reaction can be greatly reduced, the effect of reducing processing costs can be achieved.

In addition, combination of reactors having low energy consumption and high efficiency is complexly used and a portion of the treated water having been reaction-treated is repressed to use a small amount of ozone, thereby the effect in which the water treatment is completely performed can be achieved.

Further, as the processing can be performed promptly, the effect in which the processing productivity is improved can be achieved.

### BRIEF DESCRIPTION OF THE DRAWINGS

- FIG. 1: is a block diagram of an ozone water treatment system using low energy according to a preferred embodiment of the present invention.
- FIG. 2: is a block diagram of an ozone water treatment system using low energy according to a preferred embodiment of the present invention.
- FIG. 3: is a block diagram of an ozone water treatment system using low energy according to a preferred embodiment of the present invention.
- FIG. 4: is a block diagram of an ozone water treatment system using low energy according to a preferred embodiment of the present invention.
- FIG. 5: is a schematic cross-sectional view of a gas injector of an ozone water treatment system using low energy according to a preferred embodiment of the present invention.
- FIG. 6: is a partial cutaway cross-sectional view of a plate type mixing reactor of an ozone water treatment system using low energy according to a preferred embodiment of the present invention.
- FIG. 7: is a cross-sectional view of a multiple-injection reactor of an ozone water treatment system using low energy according to a preferred embodiment of the present invention.
- FIG. 8: is a schematic cross-sectional view of a split shear reactor of an ozone water treatment system using low energy according to a preferred embodiment of the present invention.
- FIG. 9: is a cross-sectional view of an injection reverse mixing reactor of an ozone water treatment system using low energy according to a preferred embodiment of the present invention.
- FIG. 10: is a block diagram of an ozone water treatment system using low energy according to another embodiment of the present invention.
- FIG. 11: is a schematic cross-sectional view of a mixing feeder of an ozone water treatment system using low energy according to another embodiment of the present invention.

### Best mode for carrying out the invention

The ozone water treatment system using low energy is provided, which is characterized in that it comprises: a water supply pipe through which a raw water to be treated is transferred and supplied while having energy; a gas injector for dispersing and injecting a ozone gas to the raw water that is supplied from the water supply pipe in the form of micro bubble; a low energy use-type gas-liquid contact reactor for promoting a contact reaction between the raw water and the ozone gas within ozone mixed water that is supplied and transferred from the gas injector; and an irrigation-type retention tank for promoting reaction by continuously transferring the treated water that is subjected to the reaction treatment and a discharge pipe for discharging, wherein the irrigation-type retention tank comprises an upper, lower, left and right, or an upper and lower baffle wall that is capable of forming a vortex for promoting the reaction.

### Form for carrying out the practice of the present invention

Hereinafter, preferred embodiments of the present invention.will be described in detail with reference to accompany drawings.

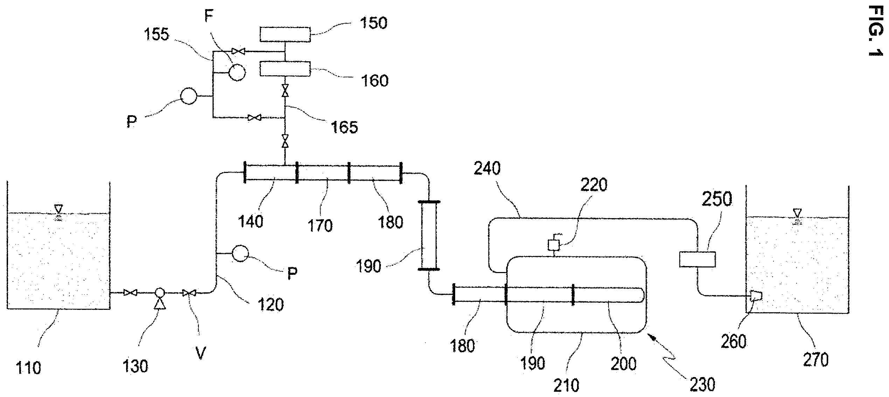

FIG. 1 is a block diagram of an ozone water treatment system using low energy according to a preferred embodiment of the present invention.

According to the present invention, the gas injector 140 for injecting the ozone gas to the raw water to be treated is used so that the use of energy is reduced at the time of injection of the ozone gas, and the low energy use-type gas-liquid contact reactor, such as the plate type mixing 170, the multiple-injection reactor 180, the split shear reactor 190 and injection reverse mixing reactor 200, is complexly used so that the use of energy is also reduced during the contact reaction, resulting in reducing the use of energy by 50-60% as compared to the combination method of conventional injector and static mixer.

Thereby, as only minimum energy is used, the water supply pump 130 supplying energy to the raw water can be omitted or used as a water supply pump having low volume, and also the water treatment can be performed by using only the holding potential energy of the raw water without using the water supply pump 130.

Also, after partial contact reaction is performed in the gas injector 140, as the contact reaction is facilitated by complexly using the plate type mixing reactor 170, the multiple- injection reactor 180, the split shear reactor 190 and the injection reverse mixing reactor 200 having low energy use-type and high efficient, the ozone utilization efficiency can be improved to 99% or more and a complete purification process is possible. Thus, it is possible to process a raw water containing a nondegradable material which is not well processed by a conventional method as well as reduce the amount of residual ozone and reduce the amount of ozone used by 20-30% as compared to the past, thereby reducing the cost of ozone generation.

The ozone water treatment system according to the present invention comprises: a raw water tank 110 for storing and supplying a raw water to be treated; a water supply pipe 120 for transferring the raw water supplied from the raw water tank 110; a water supply pump 130 for pressurizing and transferring the raw water while supplying energy to be needed to the water treatment; an ozone generator 160 for generating and supplying ozone gas at an appropriate concentration to be injected into the raw water; an ozone supply pipe 165 for transferring and supplying the ozone gas supplied from the ozone generator 160; a gas injector 140 for dispersing and injecting in the form micro bubble the ozone gas supplied through the ozone supply pipe 165 to the raw water to be internally transferred; a gas-liquid contact reactor for promoting gas-liquid reaction between the ozone gas and the raw water inside the ozone mixed water transferred and supplied from the gas injector 140; a main reactor 230 for nearly completing the contact reaction by promoting the contact reaction the raw water and the ozone gas to follow up; and a discharge pipe 240 for transferring and discharging the treated water having been reaction-treated discharged from the main reactor 240.

The raw water tank 110 introduces the raw water to be treated, temporarily stores and then supplies it. It is selected to have a volume capable of overcoming the variation of the inflow amount of the raw water and operating the system stably.

The one side of the raw water tank 110 is equipped with an outlet through which the raw water is discharged, and the outlet is connected to one end of the water supply pipe 120 to be open.

Here, the raw water may be directly supplied through the water supply pipe 120 without the raw water tank 110, but it is preferable that the raw water tank 110 is provided for supplying the raw water in a stable manner.

The water supply pipe 120 is a pipe for internally transferring and supplying the raw water supplied from the raw water tank 110, the one end thereof is connected to the outlet of the raw water tank 110 and the other end thereof is connected to the front end of the gas injector 140 to supply the raw water to the gas injector 140.

This water supply pipe 120 is designed and equipped to minimize the energy loss of the raw water to be supplied and transferred.

The water supply pump 130 gives energy necessary for the water treatment to the raw wate so that the raw water may be supplied and transferred by being sucked and pressured at constant pressure and flow rate, and thus what the operation efficiency is excellent with regard to flow rate and pump-up head is selected and used.

According to the present invention, even if only a small amount of energy is provided to the raw water, the water treatment is smoothly possible, thereby the water supply pump 130 giving the raw water to energy can be omitted or used as a small capacity, and also the raw water may be supplied only with the potential energy due to head drop without obstinately using the water supply pump 130, at this time the potential energy due to head drop can be realized by vertically providing the water supply pipe 120.

The ozone generator 160 generates and supplies ozone gas having an appropriated concentration and volume to be injected to the raw water to be transferred, and the ozone is generated by a raw material gas supplied from a separate raw material gas tank 150.

When the raw material gas is oxygen or dry air, this ozone generator 160 can generate the ozone by passing the raw material supplied at a predetermined pressure state through an electric field to separate a portion of oxygen molecule into oxygen atoms and then to combine the separated oxygen atoms with other oxygen molecule.

The raw material gas tank 150 supplies a raw material gas required for generating ozone to the ozone generator 160, and the raw material gas may be oxygen or dry air.

The ozone supply pipe 165 internally transfers and supplies the ozone gas supplied from the ozone generator 160 to the gas injector 140, and the one end thereof is connected to the ozone generator 160 and the other end thereof is connected to the gas injector 140.

This ozone supply pipe 165 may be properly designed to protect the ozone generator 160 by preventing the backflow of the raw water from the gas injector 140 due to temporary mismatch of water pressure for supplying the raw water.

Of course, separate backflow prevention means (not shown) such as a check valve may be equipped on the ozone supply pipe 165 to more completely block the backflow of the raw water.

In addition, a gas supply pipe (not shown) may be further comprised to generate and supply oxygen gas and chlorine gas in addition to ozone gas to be injected to the gas injector 140.

Meanwhile, the raw material gas supply pipe 155 is equipped so that it may directly connect a portion between the raw material gas tank 150 and the ozone supply pipe 165 and directly supply the raw material gas in high pressure state to the gas injector 140 at the required time, thereby solving and repairing contamination, clogging, etc. of the gas injector 140.

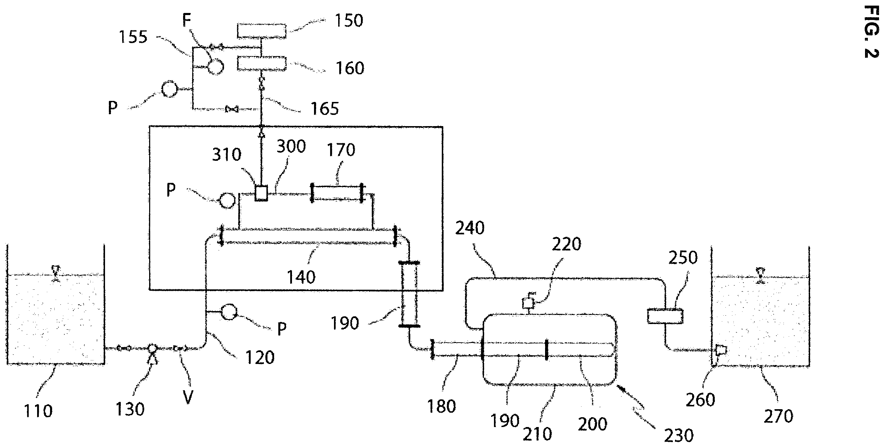

FIG. 2 shows another block diagram of an ozone water treatment system using low energy according to an embodiment of the present invention and a Side stream composition is added to the portion composed of the gas injector 140, the plate type mixing reactor 170 and the multiple-injection reactor 180 shown in description of FIG. 1.

This is made in order to add various methods of the gas injection method. The injection method may be different depending on the type of the gas injector 140. However, because the injection method may be different depending on the composition of pipe, the Side stream injection method is added as shown in FIG. 2 in addition to Full stream injection method as shown in FIG. 1.

In the case of the Side stream injection, unlike conventional methods, there are features that the side stream ratio is minimized to minimize power ratio and mixing can be processed excellently.

The side stream is a method in which an auxiliary pipeline 300 is further added, a portion of the flow rate to be flowed in is flowed to the auxiliary pipeline 300 by using a pump and the gas is injected by using the ejector 310.

The contact reaction can be facilitated in a complex manner using one or more of the plate type mixing reactor 170 and the multiple-injection reactor 180 at the rear end of the auxiliary pipeline 300, and the facilitated gas liquid water is transferred again within the gas injector 140 and then mixed.

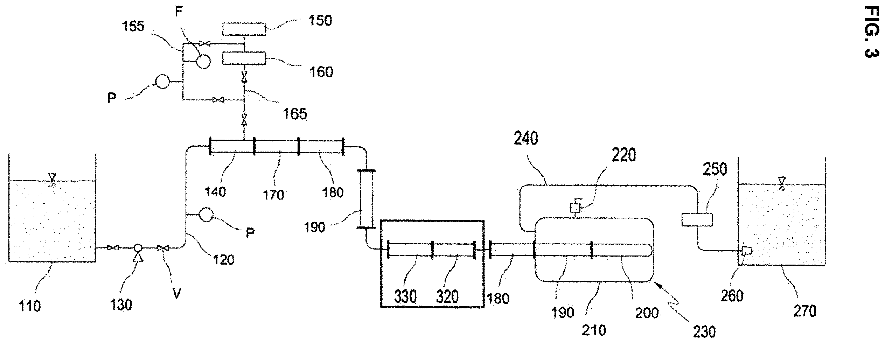

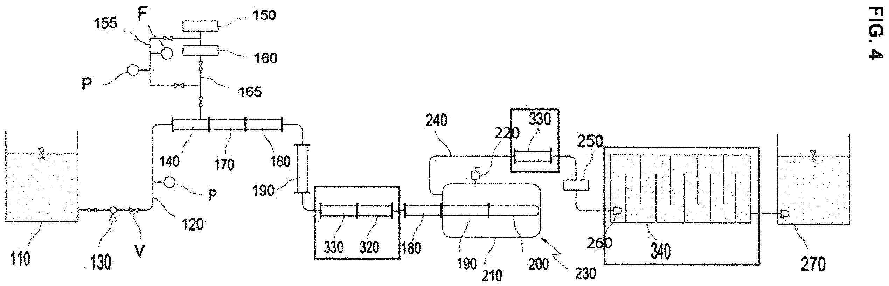

FIG. 3 and 4 show another block diagram of an ozone water treatment system according to an embodiment of the present invention.

The composition shown in FIG. 3 and 4 is also similar to the composition shown in the description of FIG. 1. At the rear end of the split shear reactor 190, one or more of the ultrasonic wave generator 330 and the ultrasonic vibration device are further added and indicated, and FIG. 4 shows that the ultrasonic wave generator 330 is connected to the front end of the discharge pipe 240 and the irrigation-type retention tank 340 is further connected at the front end of the discharge tank 270 in addition to the composition shown in FIG.3.

The installed ultrasonic wave generator 330 further facilitates the promoting reaction of the reactor. In addition, the ultrasonic vibration device 320 is installed at the rear end of the ultrasonic wave generator 330, so that the reaction of the residual ozone is maximized, thereby minimizing damage due to the smell of ozone at the rear end.

The irrigation-type retention tank 340 in FIG. 4 is required for further promoting the reaction of the gas and the treated water under the contact reaction with the gas injected.

The irrigation-type retention tank 340, which has entire structure sealed, is installed at the front end of the discharge tank 270. An upper, lower, left and right baffle wall capable of forming vortexes for promoting the reaction are installed at the inside of the irrigation-type retention tank 340. The irrigation-type retention tank 340 is characterized in that it is sealed to continuously maintain the reaction with the fluid without external outflow of gas.

In the composition of FIG. 3 and 4, the ultrasonic wave generator 330 and the ultrasonic vibration device 320 are commonly installed at the rear end of the Full stream injection method and the Side stream injection method, so that the ozone gas injected in the form of micro bubble complexly uses the plate type mixing reactor 170 and the multiple-injection reactor 180, thereby promoting the contact reaction, and then an ultrasonic cavitation phenomenon occurs through the ultrasonic wave generator 33 and the ultrasonic vibration device 320, so that the contact reaction may be further facilitated, thereby the promotion of the reaction with an ozone and the water treatment effect by ultrasonic waves can be achieved.

In addition, the ultrasonic wave generator 330 is further installed at the front end of the discharge pipe 240, so that the reaction of the ozone that is not reacted at the front end may be maximized, thereby minimizing the odor damage even after the treatment of the discharge tank 270.

The gas injector 140 injects in a dispersion manner the ozone gas in the water of the raw water to be internally transferred by using self-pressure of the ozone gas supplied through the ozone supply pipe 165.

The type of the gas injector can comprise a membrane type gas injector, a micro bubble type gas injector, or a gas injector which can be directly and uniformly injected at whole area of the pipeline within the main pipeline of punched type injector and is made of materials such as STS304, STS316, STS316L, Astel Louis, PP, PE.

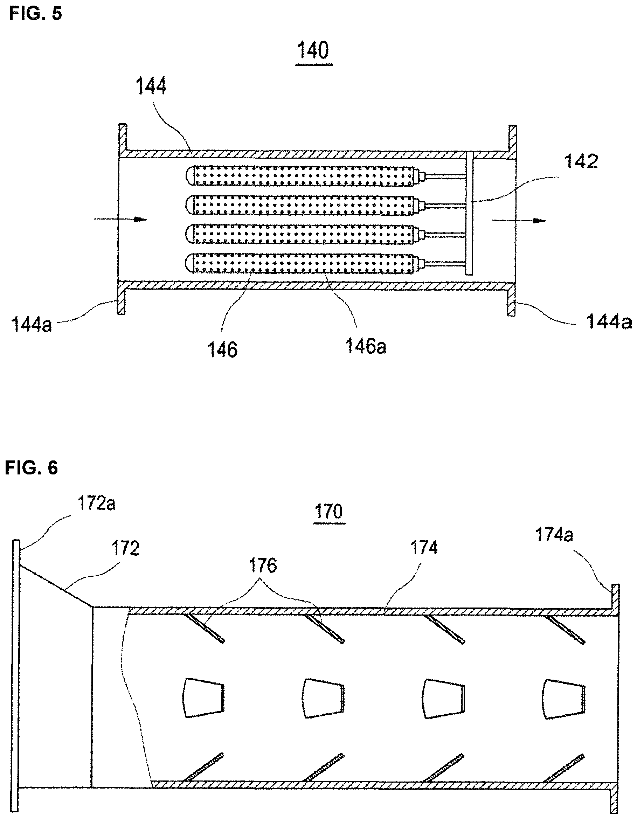

Specifically, as shown in FIG. 5, the gas injector 140 comprises: a main pipe 144 for internally transferring the raw water supplied from the water supply pipe 120; a porous pipe 146 which is equipped within the main pipe 144 as the form of pipe of a small diameter and injects the ozone gas in the water in the form micro bubble through a plurality of ultra-fine injection holes 146a generally formed on its outer surface; and a gas connection pipe 142 for connecting the ozone supply pipe 165 on the external and the porous pipe 146 on the internal and supplying the ozone gas.

Here, both ends of the main pipe 144 are opened, and a flange section 144a for connecting pipes is formed at the both ends.

In addition, the porous pipe 146 forms the ozone gas into the form of micro bubble and injects them in a dispersion manner. As shown, it is equipped with lengthways along the longitudinal direction and can be equipped with a large number to being arranged equally.

Such porous pipe 146 is equipped with being closed except for the portion which is connected to the gas connection pipe 142, and a plurality of the ultra-fine injection hole 146a disposed on the outside surface thereof are equipped with being evenly arranged.

Thus, since the ozone gas is injected dispersedly in the form of micro bubble through a plurality of ultra-fine injection hole 146a, ultra-fine bubbles of the ozone gas are quickly and evenly mixed and dissolved within the water to be internally transferred, resulting in maximizing the contact reaction between the raw water and the ozone gas.

Using such gas injector 140, the pressure loss of the ozone gas to be injected can be realized at 200 mbar or less as well as, above all, the use of energy of the raw water with regard to the ozone gas injection can be minimized, in other words, the use of energy of the raw water can be reduced to about 1/20 as compared with the case of using an existing injectors.

Preferably, the size of each ultra-fine injection hole 146a formed on the porous pipe in order to maximize the contact reaction and minimize the use of energy can be realized to 10 µm or less.

The low energy use-type gas-liquid reactor facilitates the contact reaction between the raw water and the ozone gas while minimizing the use of energy of the mixed ozone water to be transferred and particularly, the plate mixing reactor 170, the multi injection reactor 180 and the split shear reactor 190 are used.

The plate mixing reactor 170 changes the flow path of the ozone mixed water, accelerates the flow rate, and splits and shears the ozone mixing water, thereby promoting the contact reaction.

As shown in FIG. 6, such plate mixing reactor 170 comprises: an inflow reduction tube 172 which is equipped in a tube shape such that the diameter is gradually reduced so as to change the flow path and the flow rate of the ozone mixed water supplied from the gas injector 140; a rear pipe 174 to continuously transfer the ozone mixed water after the inflow reduction tube 172; and a protruding member 176 which is equipped with a large number to be protruded on the inner surface of the rear pipe 174, so that the direction and the flow rate of the ozone mixed water may be changed to cause turbulence phenomenon, and the ozone mixed is partially split and sheared.

Here, the flange section 172a and 174a are formed at the front end of the inflow reduction tube 172 and the rear end of the rear pipe 174, which are both ends of the plate mixing reactor 170.

The inflow reduction tube 712 is formed with having the diameter gradually reduced from the front end to the rear end the diameter, so that the flow rate is accelerated and the flow path of the ozone mixed water to be transferred is changed, thereby promoting the contact reaction between the raw water and the ozone gas

The protruding member 176 is equipped with a large number to be equally arranged on the inner surface of the rear pipe 174 and the ozone water to be transferred is collided with a plurality of protruding member 176, thereby changing the direction and the flow rate of the ozone water, causing a turbulence phenomenon as well as splitting and shearing the portion of the ozone water, resulting in promoting again the contact reaction between the raw water and the ozone gas.

Such protruding member 176, as shown, can be realized in the form of a titled small plate.

The multiple-injection reactor 180 facilitates the contact reaction one more by accelerating, splitting, shearing, swirling, putting on turbulence and flowing backward while continuously transferring the ozone mixed water having been reaction-treated in the plate mixing reactor 170.

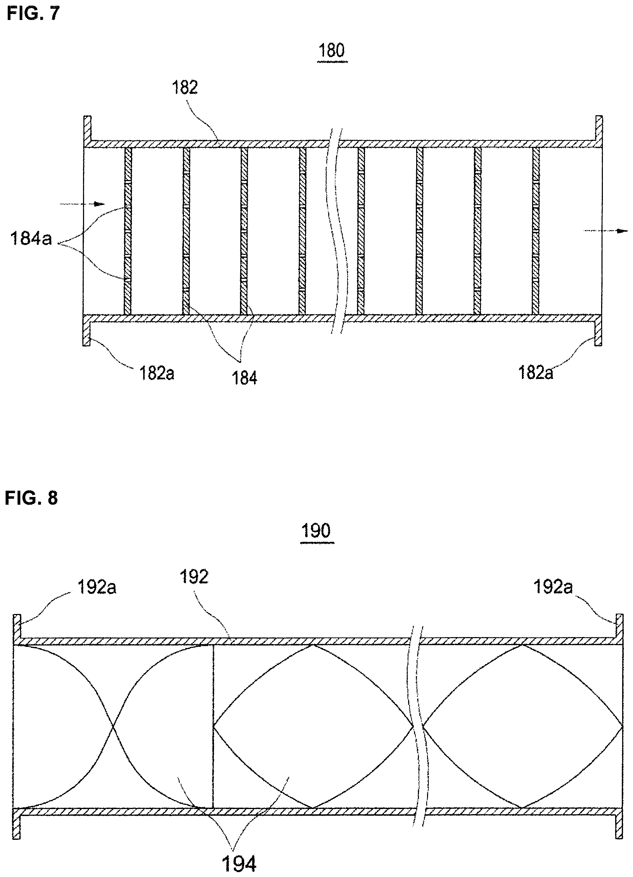

As shown in FIG. 7, such multiple-injection reactor 180 is composed of: a main pipe 182 for internally transferring the ozone mixed water supplied from the plate mixing reactor 170; and a blocking porous plate 184 which is repeatedly equipped in a direction perpendicular to the flow direction of the ozone mixed water in the form of a plate within the main pipe 182 and has a plurality of through-holes 184a.

Here, both ends of the main pipe 182 are opened and the flange section 182a for connecting pipes is formed on the both ends.

A plurality of blocking porous plate 184 are repeatedly equipped to be spaced apart from each other along the longitudinal direction of the main pipe 182.

Thus, the ozone mixed water to be transferred is sequentially hit against the blocking porous plate 184 and the flow is changed or flowed backward, or the flow rate is changed, and the flow rate is accelerated and at the same time partially split while passing through the through-holes 174a, thereby the contact reaction between the raw water and the ozone gas can be facilitated by strong shearing action and, vertex, turbulence, and backflow processes.

Such multiple-injection reactor 180 is of that reaction efficiency is far superior as the level of 10 times as compared to a conventional static mixer whereas the energy consumption is very low as the level of 83%, thereby greatly reducing the use of energy.

In summary, the distribution of the ozone gas within the raw water is getting more and more uniform while passing through the gas injector 140 and the plate mixing reactor 170, and the contact reaction between the raw water and the ozone gas will be generated completely in a full-scale while passing through the multiple-injection reactor 180.

The split shear reactor 190 facilitates the contact reaction one more by a splitting process, a shearing process, a reversing process and an applying a turbulence process while continuously transferring the ozone mixed water having been reaction-treated in the multiple-injection reactor 180.

As shown in FIG.8, such split shear reactor 190 is composed of: a main pipe 192 for internally transferring the ozone mixed water supplied from the multiple-injection reactor 180; and a spiral blade 194 which is repeatedly equipped with one of vertical direction and the other of horizontal direction in the form of a curved plate within the main pipe 192, and continuously bisect and spilt the ozone mixed water.

Here, both ends of the main pipe 192 are opened and the flange section 192a for connecting pipes is formed on the both ends.

Thus, the ozone mixed water to be transferred is continuously split and bisected every time it passes through the spiral blade 194, and its direction and flow rate are varied according to the curved form of the spiral blade 194, reversed and transformed as the direction of each spiral blade 194 is sequentially changed, thereby the contact reaction can be facilitated by strong shearing and turbulence action.

Here, when the number of the spiral blade 190 is n, the number that the ozone water is split becomes 2n.

Such split shear reactor 190 causes somewhat large the use of energy but is good in terms of reaction efficiency.

All of the plate mixing reactor 170, the multiple-injection reactor 180 and the split shear reactor 190 such as above, are a low energy use type gas-liquid contact reactors capable of greatly reducing the use of energy of the ozone mixed water as compared to conventional static mixers, and the choice of the three kinds of reactors 170, 180 and 190, the order of arrangement and the number of reactors may be optional.

The main reactor 230 facilitates the contact reaction between the raw water and the ozone gas which have not yet been reacted while passing through the plate mixing reactor 170, the multiple-injection reactor 180 and the split shear reactor 190, and almost completes the reaction.

Such main reactor 230 essentially includes a injection reverse mixing reactor 200 and selectively includes the aforementioned low energy use-type gas-liquid contact reactors in the front of the injection reverse mixing reactor 200.

The figure shows a case in which the split shear reactor 190 is selected as the embedded low energy use-type gas-liquid contact reactor.

The main reactor 230 is composed of: a reaction tank 210 which has relatively large diameter and internally holds and then discharges the treated water discharged from the injection reverse mixing reactor 200; a split shear reactor 190 and an injection reverse mixing reactor 200 embedded within the reaction tank 210; and a gas-liquid separation means 220 which separates and discharges discharge gases such as oxygen gas remaining within the ozone mixed water held within the reaction tank 210.

Here, the injection reverse mixing reactor 200 facilitates the contact reaction once more through the injection and the mixing by flowing backward.

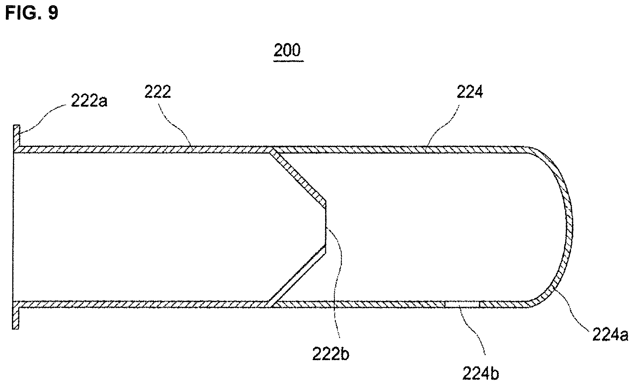

As shown in FIG. 9, such injection reverse mixing reactor 200 is composed of: an injection pipe 222 in which the front end side through which the ozone mixed water is introduced is opened, and the rear end side through which the ozone mixed water is oozed out is reduced so that an injection hole 222b is formed in the central portion; and a rear pipe 224 including: a concave reflection plate which is equipped at the rear end to flow the ozone mixed water injected from the injection pipe into a backward direction; and an outlet at one side to discharge the treated water.

Here, the front end of the injection pipe 222 is opened and a flange section 222a for connecting pipes is formed at the front end.

Thus, when the ozone mixed water supplied from the split shear reactor 190 is passed through the inside of the injection pipe 222 and is injected from the injection hole 222b, the direction and the flow rate of the ozone mixed water is changed to cause the turbulence action, and when the injected ozone mixed water is passed through the inside of the rear pipe 224 and is hit at the concave reflector plate 224a, the turbulence, vortex and backflow action are occurred to promote the contact reaction, and then the treated water for which the contact reaction is almost completed is discharged by passing through the outlet 224b formed on one side of the side wall and is held within the reaction tank 210.

The injection reverse mixing reactor 200 is also a low energy use-type gas-liquid contact reactor capable of reducing energy losses as compared to conventional static mixers.

The gas-liquid separation means 220 separates and discharges discharge gases, such as oxygen gas which is generated and remained within the treated water according to the gas-liquid contact reaction, from the treated water within the reaction tank 210 and maintains the pressure within the reaction tank 220.

Such gas-liquid separation means 220 is realized as a check valve capable of selectively discharging the exhaust gas collected at the upper space within the reaction tank 210.

A discharging pipe 240 continuously transfers and discharges the treated water discharged from the reaction tank 210 in the main reactor 230 and is extended lengthways from the reaction tank 210.

Such discharging pipe 240 is designed and equipped to minimize energy losses of the treated water to be transferred.

Further, according to the present invention, although the treated water can be transferred and discharged to the desired location through the discharging pipe 240, it is preferable that a discharging tank 270 can be further equipped to finally collect and stores the treated water discharged through the discharging pipe 240.

The discharging tank 270 finally collects and safely discharges the treated water, and is selected as a volume capable of overcoming movement in the amount of the inflow and outflow of the treated water and operating the system stably.

In addition, a pressure maintaining means 250 may be quipped on the discharging pipe 240 to minimize pressure drop within the main reactor 230 according to the discharging of the treated water through the discharging pipe 240.

Such pressure maintaining means 250 may be realized through a structure for reducing the internal flow path of the discharging pipe 240.

In addition, an injection means 260 may be equipped at the terminal end of the discharging pipe 240 in order to allow the treated water to be finally reacted within the discharging tank 270 by using residual energy and the ozone by injecting and discharging the treated water in the water of the discharging tank 270.

As described above, a configuration in the form of single line connected from the raw water tank 110 to the discharging tank 270 is related to a method to be processed one time while continuously transferring the raw water.

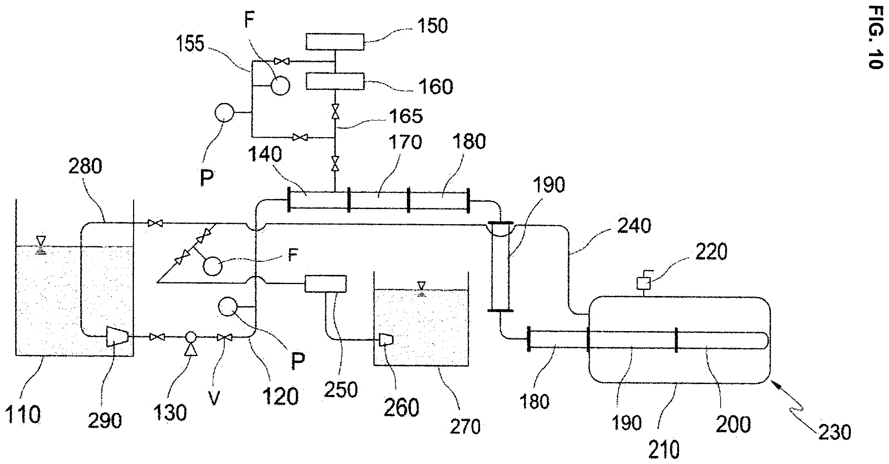

On the other hand, according to the present invention, a method which is repeatedly processed two or more times depending on the raw water quality and the processing target may be realized and the configuration of this repetition processing method is shown in FIG.10.

In the repetition processing method, a circulation pipe 280 is further equipped to allow the portion of the treated water to be branched in the middle of the discharging pipe 240 transferring the treated water from the main reactor 230 to the discharging tank 270 to be circulated to the side of the raw water tank 110.

In other words, after having been reaction-treated in the main reactor 230, the treated water to be transferred is flowed into both of the discharging pipe 240 and the circulation pipe 280 on the way, and supplied to the side of the discharging tank 270 and the side of the raw water tank 110, respectively.

In addition, for reprocessing, a mixing feeder 290 is further equipped within the raw water tank 110 and allows the treated water supplied through the circulation pipe 280 and the raw water supplied from the raw water tank 110 together to be sucked and mixed and to be supplied to the water supply pipe 120.

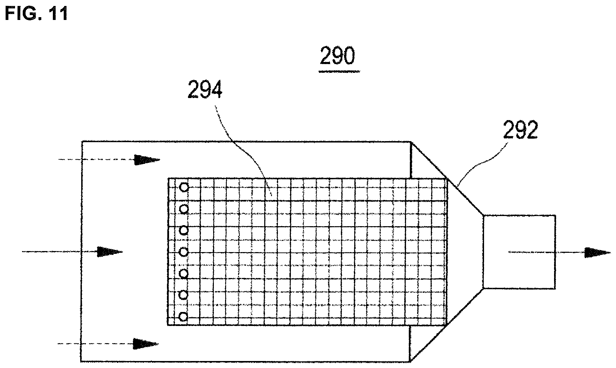

As shown in FIG. 11, the mixing feeder 290 is composed of: a mixing pipe 292 in which the side of the leading end to be input is formed as a large diameter portion having a large diameter and the side to be output is formed as a small diameter portion having a relatively small diameter; and a strainer 294 which is equipped at the center of the large diameter portion to cover the side of inlet, and allows foreign substances contained within the treated water and the raw water to which is internally transferred, to be filtered.

Thus, the terminal end of the circulation pipe 280 is inserted into the large diameter portion and contacted with the strainer 294, so that the treated water may be directly supplied to the strainer 294. The raw water in the side of the raw water tank 110 is supplied through the space between the large diameter portion of the mixing pipe 292 and the strainer 294, and the treated water and the raw water are mixed, and then supplied to the water supply pipe 120.

In addition, although not shown, the ozone water treatment system according to the present invention may further comprise a control panel for performing overall operation control to enable automatic operation, the water supply pipe 120, and a valve means V for opening and closing the supply of the fluid, a pressure meter P and a flowmeter F for measuring the pressure and the flow rate of the fluid may be equipped on the ozone supply pipe 165, the raw material gas supply pipe 155, the discharging pipe 240 and the circulation pipe 280 as described above.

Furthermore, the size, the number, structure, etc. of each element and accessory element attached thereto may be appropriately determined in consideration of the water quality and the amount of water of the target to be treated, the target of water quality, the amount of ozone gas injected, and the like.

The operation of the ozone water treatment system using low energy according to the present invention as described above is described below.

First, when the water supply pump 130 is operated, the raw water, to be treated, stored within the raw water tank 110 is sucked and transferred through the water supply pipe 120, and then supplied to the gas injector 140.

At this time, the raw water is supplied with energy required for water treatment from the water supply pump 130.

Of course, it may be also possible that the raw water is supplied with potential energy due to the head drop without using the water supply pump 130 and supplied through the water supply pipe 120.

Subsequently, the raw water supplied from the gas injector 140 flows within the gas injector 140 and at this time, the ozone gas, which is generated by the ozone generator 160 and then supplied through the ozone supply pipe 165 with a state of appropriate pressure, is sucked and mixed into the raw water which is dispersedly injected in the form of micro bubble through the porous pipe 146 within the gas injector 140 and internally flowed.

Thereafter, the ozone mixed water is continuously supplied to the plate mixing reactor 170 and is subject to an acceleration process, a turbulent flow process, a splitting process and a shearing process in the plate mixing reactor 170, thereby the contact reaction between the raw water and the ozone gas may be performed.

After that, the ozone mixed water is continuously supplied to the multiple-injection reactor 180 and is subject to an acceleration process, a splitting process, a shearing process, a swirling process, a turbulent flow process, and a backward flowing process in the multiple-injection reactor 180, thereby the contact reaction between the raw water and the ozone gas is performed again.

Subsequently, the ozone mixed water is continuously supplied to the split shear reactor 190 and split, sheared, reversed and turbulent in the split shear reactor 190, thereby the contact reaction is performed again.

Thereafter, the ozone mixed water is passed through the multiple-injection reactor 180 once more, so that the reaction is facilitated, and then is supplied to the main reactor 230.

The ozone mixed water supplied to the main reactor 230 is passed through the split shear reactor 190 embedded in the main reactor 230, so that the reaction is promote once more, and then is supplied to the injection reverse mixing reactor 200 and accelerated, turbulent, swirled and flowed backward in injection reverse mixing reactor 200, thereby the reaction is performed again.

After that, the ozone mixed water discharged from the injection reverse mixing reactor 200 is discharged and held within the reaction tank 210 in the main reactor 230, and discharge gases remaining in the water of the treated water are separated and removed by gas-liquid separation means 220 during being held within the reaction tank 210.

Thereafter, the treated water in which the water treatment has been almost completed through the main reactor 230, is discharged from the reaction tank 210 in the main reactor 230 and transferred through the discharging pipe 240, and then discharged in the water within the discharging tank 270 through the injection means 260 which is equipped at the terminal end of the discharging pipe 240, and subsequently the reaction is finished by using residual energy and residual ozone.

In addition, in the case of the repetition processing method, the portion of the treated water which is transferred through the discharging pipe 240, is divided into the circulation pipe 280 branching on the way and supplied to the side of the raw water tank 110, and the treated water which is circulated for reprocessing, is sucked and mixed with the raw water in the mixing feeder 290 and then is again transferred through the water supply pipe 120.

Thereby, according to the present invention, the use of energy can be greatly reduced by using the gas injector 140 at the time of injecting the ozone gas and the use of energy can be greatly reduced at the time of contact reaction by using the low energy use-type gas-liquid contact reactors, and the processing costs can be reduced as a result.

Further, a complete water treatment can be pursued by complexly using low energy loss type reactors such as the plate mixing reactor 170, the multiple-injection reactor 180, the split shear reactor 190 and the injection reverse reactor 200, and by circulating the portion of the treated water as needed.

Also, the processing time required to pass the entire process can be shortened to about 1/10 as compared to conventional diffuser method, thereby the productivity of processing may be also excellent.

As stated above, it is to be understood that the forgoing content is merely illustrative of the preferred embodiments according to the present invention and that modifications and variations to the present invention may be made without departing from the gist of the present invention by a person of ordinary skill in the art to which this invention pertains.

### LIST OF REFERENCE SIGNS

- 110: raw water tank
- 120: water supply pipe
- 130: water supply pump
- 140: gas injector
- 142: gas connection pipe
- 144: main pipe
- 144a: flange section
- 146: porous pipe
- 146a: injection hole
- 150: raw material gas tank
- 155: raw material gas supply pipe
- 160: ozone generator
- 165: ozone supply pipe
- 170: plate type mixing reactor
- 172: inflow reduction tube
- 172a: flange section
- 174: rear pipe
- 174a: flange section
- 176: protruding member
- 180: multiple-injection reactor
- 182: main pipe
- 182a: flange section
- 184: blocking porous plate
- 184a: through-hole
- 190: split shear reactor
- 192: main pipe
- 192a: flange section
- 194: spiral blade
- 200: injection reverse mixing reactor
- 222: injection pipe
- 222a: flange section
- 222b: injection hole
- 224: rear pipe
- 224a: concave reflection plate
- 224b: outlet
- 210: reaction tank
- 220: gas-liquid separation means
- 230: main reactor
- 240: discharge pipe
- 250: pressure maintaining means
- 260: injection means
- 270: discharge water tank
- 280: circulation pipe
- 290: mixing feeder
- 292: mixing pipe
- 294: strainer
- 300: auxiliary pipeline
- 310: ejector
- 320: ultrasonic vibration device
- 330: ultrasonic wave generator
- 340: irrigation-type retention tank

- F: flowmeter
- P: pressure meter
- V: valve means

## Claims

1. An ozone water treatment system using low energy comprising:
a water supply pipe through which a raw water, to be treated, is transferred and supplied while having energy;
a gas injector for dispersing and injecting a ozone gas in the form of micro bubble to the raw water supplied from the water supply pipe;
a low energy use-type gas-liquid contact reactor for promoting a contact reaction between the raw water and the ozone gas within ozone mixed water supplied and transferred from the gas injector; and
an irrigation-type retention tank for promoting reaction by continuously transferring treated water having been reaction-treated and a discharge pipe for discharging,
wherein the irrigation-type retention tank comprises an upper, lower, left and right, or an upper and lower baffle wall capable of forming a vortex for promoting the reaction.

2. The ozone water treatment system using low energy according to claim 1, which is **characterized in that** the low energy use-type gas-liquid contact reactor comprises one or more combinations selected from a plate type mixing reactor, a multiple-injection reactor and a split shear reactor.

3. The ozone water treatment system using low energy according to claim 1 or 2, which is **characterized in that** the raw water supplied through the water supply pipe is pressurized and transferred by potential energy due to head drop.

4. The ozone water treatment system using low energy according to claim 1 or 2, which further comprises a water supply pump for supplying energy to the raw water and sending the raw water.

5. The ozone water treatment system using low energy according to claim 1 or 2, which further comprises a raw water tank for storing and supplying the raw water to the water supply pipe.

6. The ozone water treatment system using low energy according to claim 1 or 2, which further comprises: an ozone generator for generating and supplying the ozone gas to be supplied to the gas injector; and an ozone supply pipe for transferring and supplying the ozone gas supplied from the ozone generator to the gas injector.

7. The ozone water treatment system using low energy according to claim 1 or 2, which further comprises a gas supply pipe for generating and supplying oxygen gas and chlorine gas in addition to ozone gas to be supplied to the gas injector.

8. The ozone water treatment system using low energy according to claim 1 or 2, wherein the type of the gas injector comprises a membrane type gas injector, a micro bubble type gas injector, or a gas injector which can directly and uniformly inject at whole area of the pipeline within the main pipeline of punched type injector and is made of materials such as STS304, STS316, STS316L, Astel Louis, PP, PE.

9. The ozone water treatment system using low energy according to claim 1 or 2, wherein the ozone gas injected in the form of micro bubble is used in a complex manner by a plate type mixing reactor and a multiple-injection reactor to promote contact reaction, and then an ultrasonic cavitation phenomenon is occurred through an ultrasonic wave generator to further promote the contact reaction, thereby water treatment effects according to secondary contact reaction of ozone and raw water as well as ultrasonic waves can be simultaneously achieved.

10. The ozone water treatment system using low energy according to 1 or 2, which is **characterized in that** it further comprises a side stream composition for adding an auxiliary pipeline to the gas injector, for enabling the portion of inflow to flow to the auxiliary pipeline by using a pump, and for injecting gas by using an ejector, the contact reaction can be facilitated by using one or more the plate-type mixing reactor and the multiple-injection reactor in a complex manner at the rear end of the auxiliary pipeline, and the facilitated gas-liquid water is again moved into the gas injector so as to be mixed.

11. The ozone water treatment system using low energy according to claim 1 or 2, which further comprises: a discharge water thank for storing the treated water discharged from the discharge pipe; and an injection means which is equipped at the end of the discharge pipe to inject the treated water in the water within the discharge water tank.

12. The ozone water treatment system using low energy according to claim 1 or 2, which further comprises a main reactor for promoting the contact reaction between the ozone gas and the raw water within the ozone mixed water supplied from the low energy use-type gas-liquid contact reactor, and supplying the treated water having been reaction-treated to the discharge pipe.

13. The ozone water treatment system using low energy according to claim 12, wherein an ultrasonic generator is selectively installed at the rear end of the main reactor and at the front end of the discharge pipe to minimize odor damage due to ozone by maximizing the reaction of the ozone that is not reacted in the pretreatment process and zeroing the residual ozone.

14. The ozone water treatment system using low energy according to claim 2, which is **characterized in that** the low energy use-type gas-liquid contact reactor is equipped in the order of the plate type mixing reactor, the multiple-injection reactor, the split shear reactor and the multiple-injection reactor.

15. The ozone water treatment system using low energy according to claim 1, which is **characterized in that** the irrigation-type retention tank is of a sealed irrigation-type capable of continuously maintaining the reaction with the fluid without the external outflow of gas.

16. The ozone water treatment system using low energy according to claim 12, which is **characterized in that** the main reactor comprises: an injection reverse mixing reactor for injecting, flowing backward and mixing the ozone mixed water to cause the contact reaction; and a reaction tank in which the injection reverse mixing reactor is embedded in and the treated water discharged from the injection reverse mixing reactor is held and then discharged.

17. The ozone water treatment system using low energy according to claim 16, which further comprises a low energy use-type gas-liquid contact reactor which is embedded in the reaction tank and performs the contact reaction with the ozone mixed water and then discharges to the injection reverse mixing reactor.

18. The ozone water treatment system using low energy according to claim 17, which is **characterized in that** the low energy use-type gas-liquid contact reactor is any one or more selected from the plate type mixing reactor, the multiple-injection reactor and the split shear reactor.

19. The ozone water treatment system using low energy according to claim 16, which is **characterized in that** the injection reverse mixing reactor comprises:
an injection pipe in which the front end of which the ozone mixed water is flowed in is opened and the rear end of which the ozone mixed water is flowed out is reduced in cross section so that an injection hole is formed in the central portion; and
a rear pipe which comprises: a concave reflection plate formed at the rear end to collide and flow backward the ozone mixed water injected from the injection pipe; and
an outlet at one side to discharge the treated water.

20. The ozone water treatment system using low energy according to claim 1, which is **characterized in that** the gas injector comprises:
a main pipe for internally transferring the raw water supplied from the water supply pipe; and a porous pipe which is equipped within the main pipe and injects the ozone gas supplied through a plurality of injection holes, in the water of the raw water in the form of micro bubble.

21. The ozone water treatment system using low energy according to claim 2, which is **characterized in that** the plate type mixing reactor comprises:
an inflow reduction tube which is equipped in a shape such that the diameter is gradually reduced so as to change the flow path and the flow rate of the ozone mixed water supplied from the gas injector;
a rear pipe which internally transfers the ozone mixed water supplied from the inflow reduction tube; and
a protruding member which is equipped with a large number to be protruded on the inner surface of the rear pipe so that the direction and the flow rate of the ozone mixed water is changed, split and sheared and then the ozone mixed water is contacted.

22. The ozone water treatment system using low energy according to claim 2, which is **characterized in that** the multiple-injection reactor comprises:
a main pipe for internally transferring the ozone mixed water; and
a blocking porous plate which is equipped in a direction perpendicular to the flow direction of the ozone mixed water within the main pipe and has a plurality of through-holes through which the ozone mixed water passes.

23. The ozone water treatment system using low energy according to claim 2, which is **characterized in that** the split shear reactor comprises:
a main pipe for internally transferring the ozone mixed water; and
a spiral blade which is repeatedly equipped along a longitudinal direction within the main pipe and is in the form of a curved plate.

24. The ozone water treatment system using low energy according to claim 1, which further comprises:
a circulation pipe which is branched in the middle of the discharge pipe and transfers a portion of the treated water toward the raw water tank for reprocessing; and
a mixing feeder which mixes the treated water supplied through the circulation pipe and the raw water supplied from the raw water tank, and supplies mixed water to the water supply pipe.

25. The ozone water treatment system using low energy according to claim 24, which is **characterized in that** the mixing feeder comprises:
a mixing pipe for mixing the treated water and the raw water while internally transferring the treated water and the raw water; and a strainer which is equipped within the mixing pipe and filters out foreign matter.
